# EUROPEAN PATENT SPECIFICATION

(11) **EP 4 601 025 B1**
(45) Date of publication and mention of the grant of the patent: **08.07.2026**
(21) Application number: 24171155.5
(22) Date of filing: 18.04.2024
(51) Int. Cl.: H01M 4/131, H01M 4/36, H01M 4/58, H01M 4/62, H01M 4/04, H01M 4/136, H01M 4/1397, H01M 10/0525, C01B 32/05

(54) **POSITIVE MATERIAL, PREPARATION METHOD THEREOF, AND SECONDARY BATTERY**
POSITIVMATERIAL, HERSTELLUNGSVERFAHREN DAFÜR UND SEKUNDÄRBATTERIE
MATÉRIAU POSITIF, SON PROCÉDÉ DE PRÉPARATION ET BATTERIE SECONDAIRE

(30) Priority: 07.02.2024 CN 202410173173
(43) Date of publication of application: 13.08.2025
(73) Proprietor: Jinko Energy Storage Technology Co., Ltd., Haining, Zhejiang 314415 (CN)
(72) Inventor: Liang, Yadong, Haining City, 314415 (CN); Wang, Kunbo, Haining City, 314415 (CN)
(74) Representative: Slingsby Partners LLP

(56) References cited:
- CN-A- 115 611 255
- FANG XIAO ET AL: "Embedding of Mg-doped V 2 O 5 nanoparticles in a carbon matrix to improve their electrochemical properties for high-energy rechargeable lithium batteries", JOURNAL OF MATERIALS CHEMISTRY A, vol. 5, no. 33, 24 July 2017 (2017-07-24), GB, pages 17432 - 17441, XP055618532, ISSN: 2050-7488, DOI: 10.1039/C7TA02761C

## Description

### TECHNICAL FIELD

The present disclosure relates to the technical field of secondary batteries, and in particular, to a positive material, a preparation method thereof, and a secondary battery.

### BACKGROUND

In recent years, with the development of technologies and the implementation of the "carbon neutrality" concept, demands in the field of new energy sources have developed rapidly. Lithium-ion batteries have advantages of high energy density, no memory effect, and a long cycle life, and are widely used in industries such as consumer products, power batteries, and energy storage. Common lithium-ion battery positive materials mainly include lithium iron phosphate, ternary materials, and lithium cobalt oxide.

Lithium iron phosphate has attracted widespread attention since it was proposed in 1997, and has a place among positive materials of lithium-ion batteries due to excellent stability, high-rate charging, non-toxicity, and a long cycle life. However, lithium iron phosphate also has obvious defects, such as low tap density and compaction density, low conductivity, and ion diffusivity, which limits further widespread application of lithium iron phosphate to the positive materials.

Therefore, how to prepare lithium iron phosphate materials with high dynamics performance, a high capacity, and excellent cycle performance is the technical focus in this field.

CN 115611255 describes a lithium iron phosphate material comprising secondary microspheres. These secondary microspheres comprise nanoparticles. The secondary microspheres have a size of 5-20 µm and the nanoparticles have a size of 100-200nm. FANG microspheres have a size of 5-20µm and the nanoparticles have a size of 100-200nm. XIAO ET AL (Embedding of Mg-doped V2O5 nanoparticles in a carbon matrix to improve their electrochemical properties for high-energy rechargeable lithium batteries) describes that Hierarchical Mg-doped V2O5@carbon (HVC) spheres were fabricated using poly(methacrylic acid) (PMAA) microgel as a microreactor. The monodisperse micron-sized spheres are formed from 200 nm particles, in which primary V2O5 nanoparticles are embedded uniformly in a carbon matrix to form a mulberry-like morphology. The effect of the Mg-doping level on the electrochemical properties of the as-prepared HVC spheres was studied.

### SUMMARY

In order to overcome the above defects, the present disclosure provides a positive material, a preparation method thereof, and a secondary battery, which can improve a capacity, rate performance, cycle performance, and low-temperature performance of the positive material. The invention is set out in the appended set of claims.

In a first aspect, an embodiment of the present disclosure provides a positive material, the positive material including a lithium iron phosphate active material and a coating layer, wherein the lithium iron phosphate active material includes a plurality of secondary particles, a plurality of first primary particles are distributed between at least part of the secondary particles, and the coating layer includes first coating layers covering surfaces of the secondary particles, the first coating layers covering the surfaces of the secondary particles in a surface-coated state, and the first coating layers each having a reticular structure.

In a second aspect, an embodiment of the present disclosure provides a preparation method for a positive material, including the following steps:
mixing an iron source and microgel to obtain a first precursor, the first precursor including the microgel and the iron source distributed inside and outside the microgel, the microgel including a carbon chain polymer; and
mixing the first precursor, a phosphorus source, a lithium source, and a carbon source for heat treatment to obtain the positive material.

In a third aspect, an embodiment of the present disclosure provides a secondary

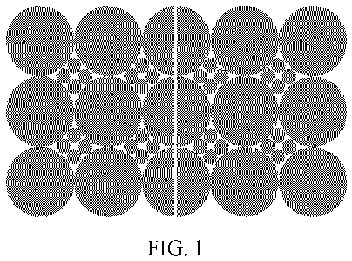

battery, the secondary battery including a positive material prepared with the preparation method described in the first aspect or the positive material according to any one of the second aspect.
Compared with the prior art, the technical solution has at least the following technical effects. In the positive material according to the present disclosure, the first coating layers on the surfaces of the secondary particles cover the surfaces of the secondary particles in a surface-coated state, and the first coating layers each have a reticular structure. On the one hand, the surface-coated first coating layers can reduce entry of an electrolyte into the positive material, inhibit erosion of the positive material by the electrolyte, reduce occurrence of side reactions between the electrolyte and an active material of the positive material, and improve first efficiency and a capacity of the positive material. On the other hand, the first coating layers having the reticular structures can prevent the problem of blockage of ion transport caused by excessive thicknesses of the coating layers formed in a conventional coating manner, the reticular coating layers are conducive to forming a conductive network between the secondary particles, improve conductivity of the positive material, and reduce contact resistance and electrode polarization between the particles, and the reticular coating layers are distributed on the surfaces of the secondary particles, which can provide sufficient ion transport channels for the positive material during charge and discharge and improve a lithium deintercalation/intercalation capability of the positive material, thereby improving rate performance and cycle performance of the positive material. The plurality of first primary particles distributed between the secondary particles can improve a specific surface area of the positive material, shorten a lithium ion transport distance, and improve dynamics performance of the positive material. FIG. 1 is a schematic structural diagram of a positive material according to the present disclosure. As can be seen from FIG. 1, the positive material according to the present disclosure includes a plurality of secondary particles and a plurality of first primary particles distributed between the secondary particles, and through matching between the first primary particles and the secondary particles, compaction density of the positive material is increased, and a capacity, rate performance, and cycle performance of the positive material are improved.

### BRIEF DESCRIPTION OF DRAWINGS

The present disclosure is further described below with reference to the accompanying drawings and embodiments.
FIG. 1 is a schematic structural diagram of a positive material according to the present disclosure; and
FIG. 2 is a flowchart of preparation of the positive material according to the present disclosure.

### DESCRIPTION OF EMBODIMENTS

In order to better understand the technical solution of the present disclosure, the embodiments of the present disclosure will be described in detail below with reference to the accompanying drawings.

It should be clear that the described embodiments are only some of the embodiments of the present disclosure, rather than all of the embodiments. Based on the embodiments in the present disclosure, all other embodiments obtained by those of ordinary skill in the art without creative efforts fall within the protection scope of the present disclosure.

The terms used in the embodiments of the present disclosure are only for the purpose of describing particular embodiments and are not intended to limit the present disclosure. As used in the embodiments of the present disclosure and the appended claims, the singular forms of "a/an", "said", and "the" are intended to include plural forms, unless otherwise clearly specified in the context.

It is to be understood that the term "and/or" used herein only describes an association relationship between associated objects and indicates that three relationships may exist. For example, A and/or B may represent the following three cases: only A exists, both A and B exist, and only B exists. In addition, the character "/" herein generally indicates an "or" relationship between the associated objects.

As a positive material, lithium iron phosphate has advantages of a high charging rate, a long cycle life, and high stability. Compared with other positive materials, lithium iron phosphate has poor dynamics performance and weak conductivity, which limits power characteristics of lithium-ion batteries supported by lithium iron phosphate. This problem may be alleviated by shortening a lithium ion transport distance by reducing a particle diameter of lithium iron phosphate through nanocrystallization. However, the nanocrystallization of lithium iron phosphate greatly increases difficulty in preparation of positive materials, and nanocrystallized lithium iron phosphate has poor dispersing performance, making it difficult to increase compaction density. With the deepening of the nanocrystallization of lithium iron phosphate, a specific surface area of lithium iron phosphate increases, causing an increase in surface side reactions and reducing electrochemical performance and a service life of a lithium iron phosphate positive material used in batteries.

In view of the above, an embodiment of the present disclosure provides a positive material, including a lithium iron phosphate active material and a coating layer. The lithium iron phosphate active material includes a plurality of secondary particles, a plurality of first primary particles are distributed between at least part of the secondary particles, and the coating layer includes first coating layers covering surfaces of the secondary particles. The first coating layers cover the surfaces of the secondary particles in a surface-coated state, and the first coating layers each have a reticular structure.

In the above solution, in the positive material according to the present disclosure, the first coating layers on the surfaces of the secondary particles cover the surfaces of the secondary particles in a surface-coated state, and the first coating layers each has a reticular structure. On the one hand, the surface-coated first coating layers can reduce entry of an electrolyte into the positive material, inhibit erosion of the positive material by the electrolyte, reduce occurrence of side reactions between the electrolyte and an active material of the positive material, and improve first efficiency and a capacity of the positive material. On the other hand, the first coating layers having the reticular structures can prevent the problem of blockage of ion transport caused by excessive thicknesses of the coating layers formed in a conventional coating manner, the reticular coating layers are conducive to forming a conductive network between the secondary particles, improve conductivity of the positive material, and reduce contact resistance and electrode polarization between the particles, and the reticular coating layers are distributed on the surfaces of the secondary particles, which can provide sufficient ion transport channels for the positive material during charge and discharge and improve a lithium deintercalation/intercalation capability of the positive material, thereby improving rate performance and cycle performance of the positive material. The plurality of first primary particles distributed between the secondary particles can improve a specific surface area of the positive material, shorten a lithium ion transport distance, and improve dynamics performance of the positive material. FIG. 1 is a schematic structural diagram of a positive material according to the present disclosure. As can be seen from FIG. 1, the positive material according to the present disclosure includes a plurality of large-sized secondary particles and a plurality of small-sized first primary particles distributed between the secondary particles, and through matching between the first primary particles and the secondary particles, compaction density of the positive material is increased, and a capacity, rate performance, and cycle performance of the positive material are improved.

In the present disclosure, the first coating layers cover the surfaces of the secondary particles in a surface-coated state, and the first coating layers each have a reticular structure. It may be understood that the first coating layers can completely cover the surfaces of the secondary particles, and an outer surface of each of the first coating layers has a vein structure similar to a leaf. The outer surface of the first coating layer has a surface portion similar to epidermis of a leaf and vein portions (raised portions) similar to veins of a leaf. The surface portion is thinner, the vein portions are thicker, and the vein portions are connected to each other to form a reticular structure.

In some embodiments, the secondary particles include a plurality of second primary particles, and the secondary particles are particles formed after the second primary particles are agglomerated. In some embodiments, the secondary particles are aggregates formed by agglomeration of the second primary particles. It may be understood that the plurality of second primary particles agglomerate to form the secondary particles, and the surfaces of the secondary particles each have a first coating layer with a reticular structure. The first coating layer can provide sufficient ion transport channels. At the same time, median particle diameters of the second primary particles are smaller than those of the first primary particles. Compared with the first primary particles, lithium ion diffusion distances of the second primary particles with smaller particle diameters are shorter, which improves lithium ion transport efficiency of the second primary particles and improves conductivity, thereby improving rate performance of the positive material. In addition, the second primary particles with smaller particle diameters can also increase a solid-liquid transport interface between the positive material and an electrolyte, improving dynamics performance and low-temperature performance of the positive material.

It may be understood that a median particle diameter (D50) represents a corresponding particle diameter when a cumulative particle size distribution percentage of a sample reaches 50%. In some embodiments, the median particle diameters of the secondary particles may be measured with a method such as dynamic light scattering, while the median particle diameters of the primary particles may be measured with a method such as a scanning electron microscope (SEM) or a transport electron microscope (TEM), and particle size distribution is calculated from captured pictures.

It may be understood that both the first primary particles and the second primary particles are crystals grown from crystal nuclei, that is, single crystal particles, and internal structures thereof have a complete lattice. The first primary particles and the second primary particles are different merely in different locations and particle diameters.

In some embodiments, the median particle diameters of the first primary particles range from 100 nm to 800 nm, which may be, for example, 100 nm, 200 nm, 300 nm, 400 nm, 500 nm, 600 nm, 700 nm, or 800 nm. Within the above range, the median particle diameters of the first primary particles are smaller, which is conducive to increasing compaction density and improving dispersion performance of the positive material, thereby increasing a capacity of the positive material.

In some embodiments, the median particle diameters of the second primary particles range from 50 nm to 700 nm, which may be, for example, 50 nm, 100 nm, 200 nm, 300 nm, 400 nm, 500 nm, 600 nm, or 700 nm. Within the above range, the particle diameters of the second primary particles are smaller, which is conducive to intercalation and deintercalation of lithium ions of the positive material during charge and discharge and improves rate performance of the positive material. If the median particle diameters of the second primary particles are less than 50 nm, the second primary particles may be seriously agglomerated, which is not conducive to improving the cycle performance of the positive material and at the same time, reduces dispersing performance of the positive material made into a slurry, and is not conducive to improving processing performance of the positive material used in secondary batteries. If the median particle diameters of the second primary particles are greater than 700 nm, a diffusion length of lithium ions may be increased, which is not conducive to improving dynamics performance of the positive material.

In some embodiments, the median particle diameters of the secondary particles range from 400 nm to 2000 nm, which may be, for example, 400 nm, 600 nm, 800 nm, 1000 nm, 1300 nm, 1500 nm, 1800 nm, or 2000 nm. Within the above range, the particle diameters of the secondary particles are moderate, which can reduce side reactions of the positive material while improving transport performance of lithium ions, thereby improving comprehensive electrochemical performance of the positive material.

In some embodiments, the coating layer further includes second coating layers at least partially distributed on the surfaces of the first primary particles. In other words, in this embodiment, the surfaces of the secondary particles and the first primary particles are both provided with coating layers, existence of the second coating layers can effectively block contact of an active material of the positive material with air and an electrolyte and reduce side reactions, and the median particle diameters of the first primary particles are smaller, so the coating layers covering the first primary particles each have a larger specific surface area, thereby helping prolong a cycle life of the positive material.

In some embodiments, the first coating layers include carbon layers, and carbon materials in the carbon layers may be soft carbon, hard carbon, amorphous carbon, or the like.

In some embodiments, the second coating layers include carbon layers, and carbon materials in the carbon layers may be soft carbon, hard carbon, amorphous carbon, or the like.

In some embodiments, an average thickness of the first coating layers is greater than that of the second coating layers, particle diameters of the secondary particles are larger, and the average thickness of the first coating layers covering the secondary particles are larger. On the one hand, effective isolation of the active material of the positive material from the electrolyte can be ensured, reducing occurrence of side reactions. On the other hand, thicknesses of the vein portions of the first coating layers with a larger average thickness are larger, which is conducive to formation of a conductive network by contact between the reticular coating layers on the surfaces of the plurality of secondary particles and improves the rate performance of the positive material. The average thickness of the second coating layers covering the first primary particles is smaller, which is conducive to shortening a diffusion distance between lithium ions and the first primary particles, reduces difficulty in lithium deintercalation/intercalation of the positive material, and improves cycle performance and rate performance of the positive material.

In some embodiments, the average thickness of the first coating layers ranges from 1 nm to 15 nm, which may be, for example, 1 nm, 3 nm, 5 nm, 8 nm, 10 nm, 12 nm, or 15 nm. Within the above range, the average thickness of the first coating layers is moderate, and the vein portions of the first coating layers are thicker, which can effectively cover the secondary particles. At the same time, the surface portions are thinner, which can shorten the diffusion length of lithium ions, so that the positive material can quickly achieve lithium deintercalation/intercalation during charge and discharge, improving dynamics performance of the positive material. It may be understood that the average thickness of the first coating layers is an average value of a maximum thickness of at least ten groups of first coating layers and a minimum thickness of the at least ten groups of first coating layers measured. It may be understood that the maximum thickness and the minimum thickness of the first coating layers are measured by the following method: after the positive material is sectioned, a resulting cross section is shown in a SEM, the maximum thickness of the first coating layers is a thickness of a vein portion (raised portion) of the reticular structures of the first coating layers, and the minimum thickness of the first coating layers is a thickness of a vein portion (recessed portion) of the reticular structures of the first coating layers.

In some embodiments, the maximum thickness of the first coating layers is greater than the average thickness of the second coating layers, that is, the vein portion (raised portion) of the reticular structures of the first coating layers is thicker, which can ensure structural stability of the positive material, inhibit occurrence of surface side reactions of the positive material, and improve conductivity of the positive material at the same time. The minimum thickness of the first coating layers is less than the thicknesses of the second coating layers, that is, the recessed portion of the reticular structures of the first coating layers is thinner, which is conducive to reducing difficulty in lithium deintercalation/intercalation of the secondary particles and improves dynamics performance of the positive material.

In some embodiments, the average thickness of the second coating layers ranges from 1 nm to 10 nm, which may be, for example, 1 nm, 3 nm, 5 nm, 8 nm, or 10 nm. Within the above range, the second coating layers can completely cover the surfaces of the first primary particles, which effectively covers the first primary particles, and can shorten the diffusion length of lithium ions at the same time, so that the positive material can quickly achieve lithium deintercalation/intercalation during charge and discharge, improving dynamics performance of the positive material. It may be understood that the second coating layers evenly cover the surfaces of the first primary particles. The positive material is sectioned, and a cross section obtained by sectioning is measured in the figure shown by the SEM: the average thickness of the second coating layers refers to an arithmetic mean of thicknesses of at least ten groups of second coating layers at different positions.

In some embodiments, a mass percent of the first coating layers in the positive material ranges from 0.3 wt% to 2.5 wt%, which may be, for example, 0.3 wt%, 0.6 wt%, 0.9 wt%, 1.5 wt%, 1.8 wt%, 2.2 wt%, or 2.5 wt%, may certainly be other values in the above range, and is not limited herein in the present disclosure. Within the above limited range, coating layers with appropriate thicknesses can be generated, to improve the cycle performance, the capacity, and the rate performance of the positive material.

In some embodiments, a mass percent of the second coating layers in the positive material ranges from 0.1 wt% to 2.0 wt%, which may be, for example, 0.1 wt%, 0.5 wt%, 1 wt%, 1.2 wt%, 1.6 wt%, 1.8 wt%, or 2.0 wt%, may certainly be other values in the above range, and is not limited herein in the present disclosure. Within the above limited range, coating layers with appropriate thicknesses can be generated, to improve the cycle performance, the capacity, and the rate performance of the positive material.

In some embodiments, a specific surface area of the positive material ranges from 7 m²/g to 15 m²/g, which may be, for example, 7 m²/g, 8 m²/g, 9 m²/g, 10 m²/g, 11 m²/g, 12 m²/g, 13 m²/g, 14 m²/g, or 15 m²/g. The control of the specific surface area of the positive material within the above range helps improve cycle performance and safety performance of secondary batteries made of the positive material.

In some embodiments, compaction density of the positive material ranges from 2.3 g/cm³ to 2.9 g/cm³, which may be, for example, 2.3 g/cm³, 2.4 g/cm³, 2.5 g/cm³, 2.6 g/cm³, 2.7 g/cm³, 2.8 g/cm³, or 2.9 g/cm³. Within the above range, the positive material of the present disclosure has higher compaction density, which helps increase the capacity of the positive material.

In some embodiments, a median particle diameter of the positive material ranges from 0.3 µm to 2.5 µm, which may be, for example, 0.3 µm, 0.8 µm, 1.2 µm, 1.8 µm, 2.2 µm, or 2.5 µm, may be other values in the above ranges, and is not limited herein.

In some embodiments, a mass percent of the secondary particles to the first primary particles ranges from 1:50 to 20:1, which may be, for example, 1:50, 5:40, 10:30, 20:25, 40:8, or 50:1. Within the above range, the positive material of the present disclosure includes an appropriate number of secondary particles and first primary particles, and particle diameter matching and accumulation between the secondary particles and the first primary particles is conducive to increasing the compaction density of the positive material.

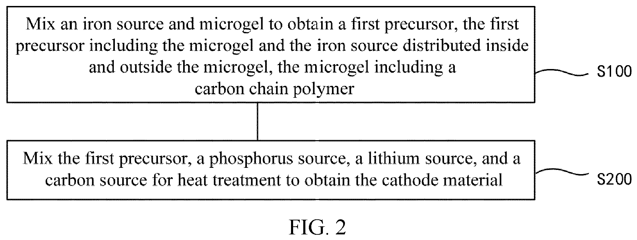

The present disclosure further provides a preparation method for the above positive material. FIG. 2 is a flowchart of preparation of the positive material according to the present disclosure, which includes the following steps:
mixing an iron source and microgel to obtain a first precursor, the first precursor including the microgel and the iron source distributed inside and outside the microgel, the microgel including a carbon chain polymer; and
mixing the first precursor, a phosphorus source, a lithium source, and a carbon source for heat treatment to obtain the positive material.

In the above solution, according to the present disclosure, the iron source and the microgel are mixed in advance, the microgel is a micro- and nano-sized gel particle, and is a polymer particle with an intramolecular crosslinking structure, the microgel has ion adsorption properties, and when mixed with the iron source, part of the iron source can be adsorbed into the microgel. That is, in the first precursor, part of the iron source is distributed inside the microgel, and part of the iron source is distributed outside the microgel. Then, the first precursor is mixed with the phosphorus source, the lithium source, and the carbon source for heat treatment. The microgel can provide two different reaction environments for in-situ synthesis of lithium iron phosphate. The iron source and the lithium source located outside the microgel react in situ to generate lithium iron phosphate single crystal particles, which are the first primary particles. At the same time, during the heat treatment, the carbon source covers the surfaces of the first primary particles to form second coating layers. The iron source and the lithium source located inside the microgel can also react in situ to generate lithium iron phosphate. However, due to a limited growth environment and restricted diffusion inside the microgel, growth of lithium iron phosphate is inhibited, causing the lithium iron phosphate inside the microgel to tend to generate smaller second primary particles. Moreover, the second primary particles easily agglomerate to form secondary particles. At the same time, the carbon source and the microgel including the carbon chain polymer are carbonized during the heat treatment to form the first coating layers on a surface of lithium iron phosphate. The microgel with the intramolecular crosslinking structure is located on the surfaces of the first coating layers after carbonization and makes the surfaces of the first coating layers each have a reticular structure. The first coating layers having the reticular structures are conducive to forming a conductive network between the secondary particles, improve conductivity of the positive material, and reduce contact resistance and electrode polarization between the particles, and the reticular coating layers are distributed on the surfaces of the secondary particles, which can provide sufficient ion transport channels for the positive material during charge and discharge and improve a lithium deintercalation/intercalation capability of the positive material, thereby improving rate performance and cycle performance of the positive material. In the present disclosure, the iron source and the microgel are mixed in advance, the process is simple, and raw materials are available, so that the iron source forms two kinds of lithium iron phosphate with different growth environments (secondary particles and first primary particles) during the in-situ formation of lithium iron phosphate, which can increase compaction density and a gram capacity of the positive material and improve the cycle performance, the capacity, and the rate performance of the positive material.

The preparation method according to the present disclosure is specifically introduced below.

In step S 100, an iron source and microgel are mixed to obtain a first precursor, the first precursor including the microgel and the iron source distributed inside and outside the microgel, the microgel including a carbon chain polymer.

In some embodiments, a mass percent of a crosslinking monomer in the microgel ranges from 0.1% to 10%, which may be, for example, 0.1%, 0.5%, 1%, 3%, 5%, 8%, or 10%. It may be understood that the microgel is obtained by copolymerization of the crosslinking monomer and a crosslinking agent. The mass percent of the crosslinking monomer affects adsorption performance of the microgel. Within the above limited range, the microgel has an appropriate degree of crosslinking and can adsorb an appropriate amount of iron source into the microgel, and the remaining iron source is located outside the microgel, thereby providing a synthesis environment for two different lithium iron phosphate materials. Inside the microgel, second primary particles tend to be generated in the restricted environment, and at the same time, the second primary particles easily agglomerate to form secondary particles. Outside the microgel, first primary particles tend to be generated. The cooperation between the secondary particles and the first primary particles is conducive to increasing compaction density, conductivity, and a lithium intercalation degree of the positive material, thereby improving the cycle performance, the rate performance, and the capacity of the positive material. If the mass percent of the crosslinking monomer in the microgel is excessively small, it is difficult for the microgel to form a stable confined space, which is not conducive to obtaining two different lithium iron phosphate materials. If the mass percent of the crosslinking monomer in the microgel is excessively large, it is difficult for the iron source to diffuse into the microgel, resulting in excessively few raw materials inside the microgel, which is not conducive to preparation of lithium iron phosphate secondary particles.

In some embodiments, a particle diameter of the microgel ranges from 300 nm to 2500 nm, which may be, for example, 300 nm, 500 nm, 800 nm, 1200 nm, 1600 nm, 2000 nm, 2200 nm, or 2500 nm. Within the above range, a certain space can be provided for the iron source to be embedded inside the microgel, which is conducive to obtaining two different lithium iron phosphate materials. If the particle diameter of the microgel is excessively large, it is more difficult for a lithium iron phosphate raw material to diffuse into the microgel, which is not conducive to formation of denser secondary particles. If the particle diameter of the microgel is excessively small, a spatial region formed by the microgel is excessively small, and it is difficult to form secondary particles.

In some embodiments, the microgel is a polymer particle with an intramolecular crosslinking structure, and polymers in the microgel include a carbon-containing polymer. For example, the microgel includes at least one of polyacrylic acid microgel, polystyrene microgel, and polyacrylamide microgel. The above microgel can provide two different reaction environments during the reaction of lithium iron phosphate and can also be carbonized to form a reticular coating layer after heat treatment, which can prevent the problem of blockage of ion transport caused by excessive thicknesses of the coating layers formed in a conventional coating manner. The reticular coating layers can provide sufficient ion transport channels and improve a lithium deintercalation/intercalation capability of the positive material, thereby improving rate performance and cycle performance of the positive material. Moreover, the reticular coating layers are conducive to forming a conductive network between the secondary particles, improve conductivity of the positive material, and reduce contact resistance and electrode polarization between the particles.

In some embodiments, a mass percent of the iron source to the microgel ranges from 100:0.01 to 100:1.36, which may be, for example, 100:0.01, 100:0.05, 100:0.1, 100:0.3, 100:0.8, 100:1.0, 100:1.25, or 100:1.36. In a swelling state, density of the microgel is much smaller than that of the iron source and other inorganic substances. Therefore, added mass of the microgel is much smaller than that of the iron source, so that the microgel can provide a suitable-volume generation environment for the iron source.

In some embodiments, the iron source may include a soluble iron source, and the soluble iron source includes at least one of ferric nitrate, ferric chloride, ferric sulfate, and ferric oxalate.

In some embodiments, the iron source is in the form of a solution. The solution has good fluidity, which is conducive to partial adsorption of the iron source into the microgel. At the same time, the microgel is in a swelling state, which is conducive to providing a suitable-volume generation environment for the iron source.

In some embodiments, solution concentration of the iron source is greater than or equal to 1 mol/L, which may be, for example, 1 mol/L, 2 mol/L, 3 mol/L, 4 mol/L, 5 mol/L, 6 mol/L, or 7 mol/L.

In some embodiments, the iron source and the microgel are mixed under a stirring condition, which is conducive to uniform dispersion of the iron source.

In step S200, the first precursor, a phosphorus source, a lithium source, and a carbon source are mixed for heat treatment, which includes the following steps.

In step S201, the phosphorus source is added to the first precursor, which react at 60°C to 90°C to obtain a precipitate, and the precipitate is solid-liquid separated, washed, and dried to obtain a second precursor.

In the above step, the phosphorus source is added to the first precursor, part of the phosphorus source enters the microgel, and the phosphorus source reacts with the iron source inside the microgel and the iron source outside the microgel respectively at 60°C to 90°C to form an iron phosphate precipitate.

In some embodiments, the phosphorus source includes at least one of phosphoric acid, ammonium monohydrogen phosphate, ammonium dihydrogen phosphate, ammonium phosphate, and sodium phosphate.

In some embodiments, the phosphorus source is added to the first precursor in the form of a solution, which is conducive to an intensive mixing reaction between the phosphorus source and the iron source.

In some embodiments, solid-liquid separation includes at least one of filtration and suction filtration.

In some embodiments, a solvent for washing includes at least one of deionized water and an alcohol solvent, and the alcohol solvent includes ethanol, propanol, and the like.

In some embodiments, a drying temperature ranges from 50°C to 150°C, which may be, for example, 50°C, 60°C, 80°C, 90°C, 110°C, 130°C, or 150°C.

In some embodiments, a drying time ranges from 1 h to 6 h, which may be, for example, 1 h, 2 h, 3 h, 4 h, 5 h, or 6 h.

In step S202, the phosphorus source and the carbon source are added to the second precursor, which are heated at 400°C to 700°C for 5 h to 8 h.

In this step, the phosphorus source and the carbon source are added to the second precursor, which are heated at 400°C to 700°C, so that the lithium source can react with iron phosphate generated in step S201 to generate lithium iron phosphate. Due to the existence of the microgel, the microgel can provide two different reaction environments. Part of lithium iron phosphate is generated inside the microgel, and part of lithium iron phosphate is generated outside the microgel. Inside the microgel, growth of lithium iron phosphate is restricted, which tends to produce lithium iron phosphate particles with smaller particle diameters, and the lithium iron phosphate particles agglomerate to generate secondary particles, while growth of lithium iron phosphate outside the microgel is not restricted, which tends to generate lithium iron phosphate primary particles. The addition of the carbon source serves, on the one hand, as the second precursor and a reducing agent for the lithium source, and on the other hand, the carbon source can be carbonized under a heating condition to cover surfaces of the primary particles and secondary particles. At the same time, the microgel can also be carbonized under a heating condition to generate a coating layer with a reticular structure, thereby forming first coating layers on the surfaces of the secondary particles. It may be understood that the first coating layers are obtained by coating the surfaces of the secondary particles with both the carbon source and the microgel, and the microgel is on the surfaces of the first coating layers and has a reticular structure. Existence of the reticular structure can reduce side reactions caused by the electrolyte entering the positive material, inhibit erosion of the positive material by the electrolyte, and improve first efficiency and a capacity of the positive material, and can also prevent the problem of blockage of ion transport caused by excessive thicknesses of the coating layers formed in a conventional coating manner. The reticular coating layers can provide sufficient ion transport channels and improve a lithium deintercalation/intercalation capability of the positive material. Moreover, the reticular coating layers are conducive to forming a conductive network between the secondary particles, improve conductivity of the positive material, and reduce contact resistance and electrode polarization between the particles. The second coating layers are obtained by coating the surfaces the primary particles with the carbon source. The second coating layers cover the surfaces the primary particles, which can prevent direct contact between the primary particles inside the second coating layers and the electrolyte, and can also improve conductivity of the primary particles and improve the rate performance of the positive material.

In some embodiments, the carbon source includes at least one of sucrose, glucose, and polyethylene glycol. It may be understood that the carbon source in the present disclosure is a reducing carbon source, which may be, for example, any one of sucrose, glucose, and polyethylene glycol, or a combination of polyethylene glycol and sucrose, a combination of polyethylene glycol and glucose, a combination of polyethylene glycol, sucrose, and glucose, or the like.

In some embodiments, the lithium source is at least one of lithium carbonate, lithium phosphate, lithium hydroxide, and lithium chloride.

In some embodiments, a mass percent of the iron source, the phosphorus source, to the lithium source is 1: (1 to 4): (1 to 1.5), which may be, for example, 1:1:1, 1:2:1.2, 1:3:1, or 1:4:1.5.

In some embodiments, an addition ratio of the iron source to the carbon source is 1 mol: (10 to 100) g, which may be, for example, 1 mol: 10 g, 1 mol: 30 g, 1 mol: 50 g, 1 mol: 70 g, 1 mol: 90 g, or 1 mol: 100 g. Within the above range, a coating layer with an appropriate thickness can be formed on the surface of lithium iron phosphate finally generated, which can provide dense carbon coating and also facilitates intercalation and deintercalation of lithium ions during charge and discharge of the lithium iron phosphate material, thereby improving comprehensive electrochemical performance of the positive material. If the amount of carbon source added is excessively large, the coating layer is excessively thick, which may increase internal resistance of the material and reduce a total amount of active materials. If the amount of carbon source added is excessively small, carbon coating is uneven, and conductivity of the positive material is affected.

In some embodiments, after the adding the phosphorus source and the carbon source to the second precursor, and before the heating, the method further includes a step of adding the lithium source and the carbon source to the second precursor and grinding the resulting material, which is conducive to generating lithium iron phosphate with a smaller particle diameter and improves dispersion and conductivity of lithium iron phosphate.

In some embodiments, the grinding includes ball milling or sand grinding.

In some embodiments, a heating temperature ranges from 400°C to 700°C, and may be, for example, 400°C, 450°C, 500°C, 560°C, 610°C, 650°C, 680°C, or 700°C, which is not limited, but is not merely limited to the values listed. Other values not listed in the range are also applicable. If the heating temperature is lower than 400 °C, the obtained lithium iron phosphate has poor crystallinity and powder compaction properties.

In some embodiments, step S202 further includes: further adding a dispersing solvent during the adding the lithium source and the carbon source to the second precursor. The addition of the dispersing solvent makes the lithium source, the carbon source, and the first precursor evenly dispersed, which is conducive to obtaining high-quality lithium iron phosphate and a coating layer evenly distributed on the surface of lithium iron phosphate.

In some embodiments, the dispersing solvent includes at least one of deionized water and an alcohol solvent.

In some embodiments, heating is carried out in a protective gas, and the protective gas includes at least one of nitrogen, argon, helium, and neon.

In some embodiments, a heating rate ranges from 1 °C/min to 10 °C/min, and may be, for example, 1 °C/min, 2 °C/min, 3 °C/min, 4 °C/min, 5 °C/min, 6 °C/min, 7 °C/min, 8 °C/min, 9 °C/min, or 10 °C/min, which is not limited, but is not merely limited to the values listed. Other values not listed in the range are also applicable.

An embodiment of the present disclosure further provides a secondary battery, which may be, for example, a lithium-ion battery or a sodium-ion battery. The battery includes a positive-electrode plate, a negative-electrode plate, and a separation film arranged between the positive-electrode plate and the negative-electrode plate.

The positive-electrode plate includes a positive-electrode current collector and a positive-electrode active material layer. The positive-electrode active material layer may include a positive-electrode active material, a conductive agent, and a binder. The positive-electrode active material is a lithium iron phosphate positive material prepared by the above preparation method.

The positive-electrode current collector may be an Al foil, and similarly, other common positive-electrode current collectors in this field may alternatively be used.

The conductive agent of the positive-electrode plate may include at least one of conductive carbon black, flake graphite, graphene, and a carbon nano tube.

The binder in the positive-electrode plate may include at least one of polyvinylidene fluoride, a vinylidene fluoride-hexafluoropropylene copolymer, a styrene-acrylate copolymer, a styrene-butadiene copolymer, polyamide, polyacrylonitrile, polyacrylic acid ester, polyacrylic acid, polyacrylic acid salt, carboxymethylcellulose sodium, polyvinyl acetate, polyvinyl pyrrolidone, polyvinyl ether, polymethyl methacrylate, polytetrafluoroethylene, and polyhexafluoropropylene.

The negative-electrode plate includes a current collector and a negative-electrode active material layer. The negative-electrode active material layer includes a negative-electrode active material, a conductive agent, and a binder.

The current collector of the negative-electrode plate may include at least one of a copper foil, an aluminum foil, a nickel foil, and a fluorocarbon current collector.

The negative-electrode active material may include at least one of soft carbon, hard carbon, artificial graphite, natural graphite, amorphous carbon, a silicon oxide compound, and lithium titanate.

The binder may include at least one of carboxymethylcellulose (CMC), polyacrylic acid, polyvinylpyrrolidone, polyaniline, polyimide, polyamideimide, polysiloxane, polystyrene-butadiene rubber, epoxy resin, polyester resin, polyurethane resin, and polyfluorene.

The conductive agent may include at least one of conductive carbon black, Ketjen black, acetylene black, a carbon nano tube, vapor grown carbon fiber (VGCF), and graphene.

In some embodiments, the separation film includes at least one of polyethylene, polypropylene, polyvinylidene fluoride, polyethylene terephthalate, polyimide, and aramid. For example, polyethylene includes at least one selected from high-density polyethylene, low-density polyethylene, and ultra-high molecular weight polyethylene. In particular, polyethylene and polypropylene have a good effect on preventing short circuiting and may improve stability of the battery through a shutdown effect. In some embodiments, a thickness of the separation film ranges from approximately 5 µm to 500 µm.

In some embodiments, the lithium-ion battery may also include an electrolyte. In some embodiments, the electrolyte includes, but is not limited to, at least two of dimethyl carbonate (DMC), ethyl methyl carbonate (EMC), diethyl carbonate (DEC), ethylene carbonate (EC), propylene carbonate (PC), and propyl propionate (PP). In addition, the electrolyte may additionally include at least one of vinylene carbonate (VC), fluoroethylene carbonate (FEC), and a dinitrile compound as an electrolyte additive. In some embodiments, the electrolyte further includes lithium salt.

In some embodiments, the positive-electrode plate, the separation film, and the negative-electrode plate are wound or stacked in order to form an electrode element, which is then put into, for example, an aluminum plastic film for packaging, and the electrolyte is injected, followed by chemical conversion and package, so as to manufacture a battery. Then, the prepared lithium-ion battery is subjected to a performance test and a cycle test.

The following are typical but non-limiting embodiments of the present disclosure.

### Embodiment 1

A preparation method for a lithium iron phosphate positive material, including the following steps.
(1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 1500 nm. A mass percent of an acrylic crosslinking monomer in the microgel is 2%.
(2) A 68.3 mL H₃PO₄ solution (85 wt%) is dropped into the first precursor solution in step (1), which are stirred for 20 min. Then, the obtained mixed solution is heated in a 90°C water bath for 3 h, and an obtained white precipitate is filtered, which is first washed with deionized water and ethanol, and then dried at 100°C for 4 h to obtain a second precursor FePO₄·2H₂O crystal.
(3) The FePO₄·2H₂O crystal, LiOH·H₂O, and polyethylene glycol (PEG) are mixed, wherein the FePO₄·2H₂O crystal is used as an iron source and a phosphorus source, LiOH·H₂O is used as a lithium source, PEG is used as a carbon source and a reducing agent, a molar ratio of LiOH·H₂O to FePO₄·2H₂O is 1:1, and a dosage of PEG is 40 g PEG per 1 mol of FePO₄·2H₂O. A small amount of deionized water is added to the mixture of FePO₄·2H₂O crystal, LiOH·H₂O, and PEG, which are ground and heated at 650°C for 6 h to obtain the positive material.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 2

A difference from Embodiment 1 lies in that (1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 1500 nm. A mass percent of an acrylic crosslinking monomer in the microgel is 0.5%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 3

A difference from Embodiment 1 lies in that (1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 1500 nm. A mass percent of an acrylic crosslinking monomer in the microgel is 5%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 4

A difference from Embodiment 1 lies in that (1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 1500 nm. A mass percent of an acrylic crosslinking monomer in the microgel is 8%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 5

A difference from Embodiment 1 lies in that (1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 300 nm. A mass percent of an acrylic crosslinking monomer in the microgel is 2%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 6

A difference from Embodiment 1 lies in that (1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 1000 nm. A mass percent of an acrylic crosslinking monomer in the microgel is 2%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 7

A difference from Embodiment 1 lies in that (1) 404 g Fe(NO₃)₃·9H₂O is added to 1 L deionized water, which are stirred to be completely dissolved, and 1.2120 g microgel is added and dispersed for 2 h to obtain a first precursor. The microgel is polyacrylic acid microgel. A particle diameter of the microgel is 2500 nm. A mass percent of an acrylic crosslinking monomer in the microgel is 2%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 8

A difference from Embodiment 1 lies in that (1) 404 g Fe(NO₃)₃·9H₂O is added to 1 L deionized water, which are stirred to be completely dissolved, and 0.6060g microgel is added and dispersed for 2 h to obtain a first precursor. The microgel is polyacrylic acid microgel. A particle diameter of the microgel is 1500 nm. A mass percent of an acrylic crosslinking monomer in the microgel is 2%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 9

A difference from Embodiment 1 lies in that (1) 404 g Fe(NO₃)₃·9H₂O is added to 1 L deionized water, which are stirred to be completely dissolved, and 2.7270g microgel is added and dispersed for 2 h to obtain a first precursor. The microgel is polyacrylic acid microgel. A particle diameter of the microgel is 1500 nm. A mass percent of an acrylic crosslinking monomer in the microgel is 2%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Embodiment 10

A difference from Embodiment 1 lies in that (1) 404 g Fe(NO₃)₃·9H₂O is added to 1 L deionized water, which are stirred to be completely dissolved, and 5.4944g microgel is added and dispersed for 2 h to obtain a first precursor. The microgel is polyacrylic acid microgel. A particle diameter of the microgel is 1500 nm. A mass percent of an acrylic crosslinking monomer in the microgel is 2%.

In this embodiment, a chemical composition of the positive material is LiFePO₄/C, the positive material includes a plurality of secondary particles and primary particles between the secondary particles, a surface of each of the secondary particles has a first coating layer, the first coating layer is a carbon layer, the carbon layer covers the surface of the secondary particle in a surface-coated state, and a surface of the carbon layer has a reticular structure. A surface of each of the primary particles has a second coating layer, and the second coating layer is a carbon layer.

### Comparative Example 1

A difference from Embodiment 1 lies in that (1) 404 g Fe(NO₃)₃·9H₂O is added to 1 L deionized water, which are stirred to be completely dissolved, to obtain a first precursor.

In this comparative example, a chemical composition of the positive material is LiFePO₄/C, the positive material includes primary particles, and surfaces of the primary particles have carbon coating layers.

### Comparative Example 2

A preparation method for a lithium iron phosphate positive material includes the following steps.
(1) 202 g Fe(NO₃)₃·9H₂O is added to 1 L deionized water, which are stirred to be completely dissolved, to obtain a ferric nitrate solution, and a 34.1 mL H₃PO₄ solution (85 wt%) is dropped into the ferric nitrate solution, which are stirred for 20 min. Then, the obtained mixed solution is heated in a 90°C water bath for 3 h, and an obtained white precipitate is filtered, which is first washed with deionized water and ethanol, and then dried at 100°C for 4 h to obtain a FePO₄·2H₂O crystal. Then, the FePO₄·2H₂O crystal, LiOH·H₂O, and PEG are mixed, wherein the FePO₄·2H₂O crystal is used as an iron source and a phosphorus source, LiOH·H₂O is used as a lithium source, PEG is used as a carbon source and a reducing agent, a molar ratio of LiOH·H₂O to FePO₄·2H₂O is 1:1, and a dosage of PEG is 40 g PEG per 1 mol of FePO₄·2H₂O. A small amount of deionized water is added to the mixture of FePO₄·2H₂O, LiOH·H₂O, and PEG, which are ground and heated at 650°C for 6 h to obtain a first precursor.
(2) 202 g Fe(NO₃)₃·9H₂O is added to 1 L deionized water, which are stirred to be completely dissolved, to obtain a ferric nitrate solution, and a 34.1 mL H₃PO₄ solution (85 wt%) is dropped into the ferric nitrate solution, which are stirred for 20 min. Then, the obtained mixed solution is heated in a 90°C water bath for 6 h, and an obtained white precipitate is filtered, which is first washed with deionized water and ethanol, and then dried at 100°C for 4 h to obtain a FePO₄·2H₂O crystal. Then, the FePO₄·2H₂O crystal, LiOH·H₂O, and PEG are mixed, wherein the FePO₄·2H₂O crystal is used as an iron source and a phosphorus source, LiOH·H₂O is used as a lithium source, PEG is used as a carbon source and a reducing agent, a molar ratio of LiOH·H₂O to FePO₄·2H₂O is 1:1, and a dosage of PEG is 40 g PEG per 1 mol of FePO₄·2H₂O. A small amount of deionized water is added to the mixture of FePO₄·2H₂O, LiOH·H₂O, and PEG, which are ground and heated at 650°C for 12 h to obtain a second precursor.
(3) The first precursor and the second precursor are directly mixed to obtain the positive material.

In this comparative example, a chemical composition of the positive material is LiFePO₄/C, and the positive material includes two kinds of primary particles with different particle diameter distribution: primary particles a and primary particles b. Surfaces of the primary particles with two particle diameters have coating layers, and the coating layers are carbon layers.

### Performance test:

The lithium iron phosphate materials obtained in the embodiments and comparative examples are subjected to the following performance tests:
(1) Compaction density test: The lithium iron phosphate materials obtained in the embodiments and comparative examples are subjected to a powder compaction density (using GB/T 24533-2009) test respectively.
(2) A Hitachi S4800 scanning electron microscope is used to observe surface morphology of samples, particle sizes of the positive materials, sizes of the first primary particles, sizes of the second primary particles, thicknesses of the first coating layers, and thicknesses of the second coating layers, and an average thickness of the first coating layers and an average thickness of the second coating layers are calculated based on test results.
(3) Micromeritics Tristar 3020 is used to test specific surface areas of the materials.
(4) Electrochemical performance test: the lithium iron phosphate materials obtained in the embodiments and comparative examples are each used as a positive-electrode active material, and mixed with conductive carbon black and polyvinylidene fluoride (PVDF) in a mass percent of 90:5:5, the mixture is mixed with N-methylpyrrolidone (NMP) as a solvent to make a slurry, and the slurry is applied to an aluminum foil and vacuum dried at 90°C to obtain a positive-electrode plate. Then, a button half-cell is assembled (wherein the lithium salt of the electrolyte is 1 mol/L of LiPF₆, the solvent is a mixture of ethylene carbonate (EC) and ethyl methyl carbonate (EMC) in a volume ratio of 1:1). The obtained battery is subjected to a charge-discharge test under an environment of 25±2°C, with a charge-discharge voltage range of 3.7 to 3.5 V and a current of 0.1 C, and test data is recorded. Test results are shown in Table 1 and Table 2 below:

**Table 1 Parameters of positive materials prepared in the embodiments and comparative examples**

| | Mass percent of crosslinking monomer in microgel % | Average particle diameter of microgel nm | Average thickness of first coating layer nm | Average thickness of second coating layer nm | Median particle diameter of first primary particle nm | Median particle diameter of second primary particle nm |
|---|---|---|---|---|---|---|
| Embodiment 1 | 2 | 1500 | 6.3 | 4.2 | 413 | 268 |
| Embodiment 2 | 0.5 | 1500 | 6.1 | 4.6 | 426 | 342 |
| Embodiment 3 | 5 | 1500 | 5.8 | 4.4 | 417 | 231 |
| Embodiment 4 | 8 | 1500 | 6.4 | 4.5 | 405 | 215 |
| Embodiment 5 | 2 | 300 | 5.6 | 4.7 | 421 | 323 |
| Embodiment 6 | 2 | 1000 | 6.1 | 4.6 | 409 | 287 |
| Embodiment 7 | 2 | 2500 | 6.4 | 4.7 | 401 | 249 |
| Embodiment 8 | 2 | 1500 | 6.2 | 4.3 | 411 | 283 |
| Embodiment 9 | 2 | 1500 | 6.4 | 4.4 | 425 | 271 |
| Embodiment 10 | 2 | 1500 | 6.4 | 4.5 | 403 | 265 |
| Comparative Example 1 | / | / | An average thickness of the coating layers is 4.7 | | 380 | |
| Comparative Example 2 | / | / | Primary particle a 4.5 | Primary particle b 6.2 | Primary particle a 415 | Primary particle b 280 |

**Table 2 Performance parameters of positive materials prepared in the embodiments and comparative examples**

| | Specific surface area m²/g | Compaction density g/cm³ | 0.1 C capacity mAh/g | First efficiency % | 300-week retention rate of button cell at 25°C (%) | Discharge capacity retention rate at 5 C % | Discharge capacity retention rate at - 10°C % |
|---|---|---|---|---|---|---|---|
| Embodiment 1 | 11.62 | 2.53 | 160.2 | 98.7 | 98.9 | 88.4 | 64.7 |
| Embodiment 2 | 10.58 | 2.44 | 158.8 | 98.3 | 98.8 | 86.2 | 60.4 |
| Embodiment 3 | 12.13 | 2.51 | 159.7 | 98.5 | 99.0 | 89.2 | 63.2 |
| Embodiment 4 | 12.67 | 2.47 | 160.3 | 98.8 | 98.8 | 89.5 | 65.8 |
| Embodiment 5 | 12.38 | 2.42 | 160.3 | 98.6 | 98.9 | 88.5 | 64.3 |
| Embodiment 6 | 11.52 | 2.49 | 159.8 | 98.5 | 98.7 | 88.6 | 64.8 |
| Embodiment 7 | 11.06 | 2.54 | 159.7 | 98.2 | 98.8 | 88.2 | 64.2 |
| Embodiment 8 | 11.18 | 2.42 | 159.3 | 98.1 | 98.7 | 87.3 | 62.1 |
| Embodiment 9 | 12.27 | 2.54 | 160.1 | 98.6 | 98.8 | 88.5 | 64.5 |
| Embodiment 10 | 12.87 | 2.50 | 160.4 | 98.5 | 98.7 | 88.3 | 63.9 |
| Comparative Example 1 | 12.25 | 2.35 | 159.3 | 97.8 | 97.4 | 82.1 | 56.2 |
| Comparative Example 2 | 9.82 | 2.47 | 159.6 | 98.2 | 98.1 | 79.4 | 52.8 |

According to the positive materials prepared in Embodiment 1 to Embodiment 10, microgel is added to the iron source in advance, and two different reaction environments can be provided for preparation of lithium iron phosphate, so as to obtain secondary particles and primary particles distributed between the secondary particles. The surfaces of the secondary particles each have a surface-coated coating layer having a reticular structure, which improves a capacity, rate performance, and cycle performance of the positive material. According to the present disclosure, through matching between the first primary particles and the secondary particles, compaction density of the positive material is increased, agglomeration of particles of the positive material is reduced, and the capacity and the rate performance of the positive material are improved.

In Embodiment 1 to Embodiment 4, if a mass percent of the crosslinking monomer in the microgel is different, a crosslinking degree of the microgel is different. As the crosslinking degree of the microgel increases, a swelling degree of the microgel in the solution decreases and an internal space decreases. At the same time, a transport speed of reaction raw materials in the microgel is inhibited, which further reduces the particle diameter of the precursor growing in the microgel, results in a reduction in the particle diameters of the second primary particles, helps shorten a transport distance of lithium ions in a solid phase, and improves dynamics characteristics of the positive material.

In Embodiment 1 and Embodiment 5 to Embodiment 7, as the particle diameter of the microgel increases, the volume of the secondary particles that can be accommodated inside the microgel increases, and the particle diameters of the secondary particles formed increase. Affected by the transport of reaction raw materials and the like, the particle diameters of the second primary particles are slightly reduced. The above change in the particle diameters helps increase the compaction density of the positive material to some extent.

In Embodiment 1 and Embodiment 8 to Embodiment 10, different amounts of microgel are added. As the amount of the microgel added increases, the proportion of the secondary particles increases, and the compaction density first increases and then decreases.

The positive material prepared in Comparative Example 1 includes only primary particles and carbon layers covering surfaces thereof. Upon comparison between Comparative Example 1 and Embodiment 1, the positive material in Comparative Example 1 has lower compaction density and a larger specific surface area, which increases surface side reactions and reduces a service life of lithium iron phosphate used in secondary batteries. In batteries of a same volume, it is difficult to meet higher energy density requirements.

The positive material prepared in Comparative Example 2 includes large-sized lithium iron phosphate particles and small-sized lithium iron phosphate particles. Upon comparison between Comparative Example 2 and Embodiment 1, in Comparative Example 2, large-sized lithium iron phosphate particles and small-sized lithium iron phosphate particles are required to be first prepared respectively, and then are mixed, which leads to cumbersome operation steps, a poor solid phase mixing effect, a long mixing time, and difficulty in improvement of preparation efficiency. Moreover, compared with the secondary particles in the present disclosure, in the large-sized particles used in Comparative Example 2, a solid-phase transport path of lithium ions is long and dynamics performance is poor, which is not conducive to the application of high-rate scenarios.

## Claims

1. A positive material, comprising a lithium iron phosphate active material and a coating layer, wherein
the lithium iron phosphate active material comprises secondary particles, first primary particles are distributed between at least part of the secondary particles, and the coating layer comprises first coating layers covering surfaces of the secondary particles in a surface-coated state, and each of the first coating layers has a reticular structure, the secondary particles comprise second primary particles;
the median particle diameter of the first primary particles ranges from 100 nm to 800 nm; and/or the median particle diameter of the second primary particles ranges from 50 nm to 700 nm; and/or median particle diameter of the secondary particles ranges from 400 nm to 2000 nm;
the coating layer further comprises second coating layers at least partially distributed on surfaces of the first primary particles, an average thickness of the first coating layers is greater than an average thickness of the second coating layers; and
the first coating layers are carbon layers, and the second coating layers are carbon layers.

2. The positive material according to claim 1, wherein
a median particle diameter of the second primary particles is smaller than a median particle diameter of the first primary particles.

3. The positive material according to claim 1 or 2, wherein
the median particle diameter of the first primary particles ranges from 200 nm to 600 nm; and/or the median particle diameter of the second primary particles ranges from 100 nm to 600 nm; and/or median particle diameter of the secondary particles ranges from 600 nm to 1800 nm.

4. The positive material according to claim 3, wherein
the average thickness of the first coating layers ranges from 1 nm to 15 nm; and/or the average thickness of the second coating layers ranges from 1 nm to 10 nm.

5. The positive material according to claim 4, wherein
the average thickness of the first coating layers ranges from 3 nm to 12 nm; and/or the average thickness of the second coating layers ranges from 3 nm to 8 nm.

6. The positive material according to claim 3, wherein
a mass percent of the first coating layers in the positive material ranges from 0.3 wt% to 2.5 wt%; and/or a mass percent of the second coating layers in the positive material ranges from 0.1 wt% to 2.0 wt%.

7. The positive material according to claim 6, wherein
a mass percent of the first coating layers in the positive material ranges from 0.6 wt% to 2.2 wt%; and/or a mass percent of the second coating layers in the positive material ranges from 0.5 wt% to 1.8 wt%.

8. The positive material according to claim 1, wherein
a specific surface area of the positive material ranges from 7 m²/g to 15 m²/g; and/or compaction density of the positive material ranges from 2.3 g/cm³ to 2.9 g/cm³; and/or a median particle diameter of the positive material ranges from 0.3 µm to 2.5 µm; and/or a mass percent of the secondary particles to the first primary particles ranges from 1:50 to 20: 1.

9. The positive material according to claim 8, wherein
a specific surface area of the positive material ranges from 8 m²/g to 14 m²/g; and/or compaction density of the positive material ranges from 2.4 g/cm³ to 2.8 g/cm³; and/or a median particle diameter of the positive material ranges from 0.8 µm to 2.2 µm; and/or a mass percent of the secondary particles to the first primary particles ranges from 5:40 to 40:8.

10. A method for preparing a positive material according to any one of claims 1-9, comprising:
mixing an iron source and microgel to obtain a first precursor, wherein the first precursor comprises the microgel and the iron source distributed inside and outside the microgel, and the microgel comprises a carbon chain polymer; and
mixing the first precursor, a phosphorus source, a lithium source, and a carbon source for heat treatment to obtain the positive material, wherein during the mixing the first precursor, a phosphorus source, a lithium source, and a carbon source for heat treatment, part of the phosphorus source, the lithium source, and the carbon source are adsorbed into the microgel of the first precursor and react in situ with the iron source inside the microgel to generate the secondary particles, at the same time, the microgel and the carbon source inside the microgel are carbonized during the heat treatment to form first coating layers having reticular structures on surfaces to cover the surfaces of the secondary particles, and
part of the phosphorus source, the lithium source, and the carbon source react in situ with the iron source distributed outside the microgel to generate the first primary particles;
the microgel comprises at least one of polyacrylic acid microgel, polystyrene microgel, and polyacrylamide microgel, a mass percent of the iron source to the microgel ranges from 100:0.01 to 100:1.36, and the iron source is in a form of a solution, and solution concentration of the iron source is greater than or equal to 1 mol/L;
wherein mixing the first precursor, a phosphorus source, a lithium source, and a carbon source for heat treatment comprises:
adding the phosphorus source to the first precursor, reacting at 60°C to 90°C to obtain a precipitate, and solid-liquid separating, washing, and drying the precipitate to obtain a second precursor;
adding the lithium source and the carbon source to the second precursor, which are heated at 400°C to 700°C for 5 h to 8 h; and
further adding a dispersing solvent during addition of the phosphorus source and the carbon source to the second precursor, and the dispersing solvent comprises at least one of deionized water and an alcohol solvent.

11. The method according to claim 10, wherein
a mass percent of a crosslinking monomer in the microgel ranges from 0.1% to 10%; and/or
a particle diameter of the microgel ranges from 300 nm to 2500 nm; and/or
the iron source comprises a soluble iron source, and the soluble iron source comprises at least one of ferric nitrate, ferric chloride, ferric sulfate, and ferric oxalate; and/or
the iron source and the microgel are mixed under a stirring condition.

12. The method according to claim 10, wherein
the phosphorus source comprises at least one of phosphoric acid, ammonium monohydrogen phosphate, ammonium dihydrogen phosphate, ammonium phosphate, and sodium phosphate;
the carbon source comprises at least one of sucrose, glucose, and polyethylene glycol; the lithium source comprises at least one of lithium carbonate, lithium phosphate, lithium hydroxide, and lithium chloride;
a mass percent of the iron source, the phosphorus source, to the lithium source is 1: (1 to 4): (1 to 1.5); and
an addition ratio of the iron source to the carbon source is 1 mol: (10 to 100) g.

13. A secondary battery, comprising the positive material according to any one of claims 1-9.

## Patentansprüche

1. Positivmaterial, umfassend ein Lithiumeisenphosphataktivmaterial und eine Beschichtungsschicht, wobei
das Lithiumeisenphosphataktivmaterial Sekundärpartikel umfasst, erste Primärpartikel zwischen zumindest Teil der Sekundärpartikel verteilt sind und die Beschichtungsschicht erste Beschichtungsschichten umfasst, die Oberflächen der Sekundärpartikel in einem oberflächenbeschichteten Zustand bedecken, und jede von den ersten Beschichtungsschichten eine netzartige Struktur aufweist, die Sekundärpartikel zweite Primärpartikel umfassen;
der Medianpartikeldurchmesser der ersten Primärpartikel von 100 nm bis 800 nm reicht; und/oder der Medianpartikeldurchmesser der zweiten Primärpartikel von 50 nm bis 700 nm reicht; und/oder der Medianpartikeldurchmesser der Sekundärpartikel von 400 nm bis 2000 nm reicht;
die Beschichtungsschicht ferner zweite Beschichtungsschichten umfasst, die zumindest teilweise auf Oberflächen der ersten Primärpartikel verteilt sind, eine durchschnittliche Dicke der ersten Beschichtungsschichten größer als eine durchschnittliche Dicke der zweiten Beschichtungsschichten ist; und
die ersten Beschichtungsschichten Kohlenstoffschichten sind und die zweiten Beschichtungsschichten Kohlenstoffschichten sind.

2. Positivmaterial nach Anspruch 1, wobei
ein Medianpartikeldurchmesser der zweiten Primärpartikel kleiner als ein Medianpartikeldurchmesser der ersten Primärpartikel ist.

3. Positivmaterial nach Anspruch 1 oder 2, wobei
der Medianpartikeldurchmesser der ersten Primärpartikel von 200 nm bis 600 nm reicht; und/oder der Medianpartikeldurchmesser der zweiten Primärpartikel von 100 nm bis 600 nm reicht; und/oder der Medianpartikeldurchmesser der Sekundärpartikel von 600 nm bis 1800 nm reicht.

4. Positivmaterial nach Anspruch 3, wobei
die durchschnittliche Dicke der ersten Beschichtungsschichten von 1 nm bis 15 nm reicht; und/oder die durchschnittliche Dicke der zweiten Beschichtungsschichten von 1 nm bis 10 nm reicht.

5. Positivmaterial nach Anspruch 4, wobei
die durchschnittliche Dicke der ersten Beschichtungsschichten von 3 nm bis 12 nm reicht; und/oder die durchschnittliche Dicke der zweiten Beschichtungsschichten von 3 nm bis 8 nm reicht.

6. Positivmaterial nach Anspruch 3, wobei
ein Massenprozent der ersten Beschichtungsschichten in dem Positivmaterial von 0,3 Gew.-% bis 2,5 Gew.-% reicht; und/oder ein Massenprozent der zweiten Beschichtungsschichten in dem Positivmaterial von 0,1 Gew.-% bis 2,0 Gew.-% reicht.

7. Positivmaterial nach Anspruch 6, wobei
ein Massenprozent der ersten Beschichtungsschichten in dem Positivmaterial von 0,6 Gew.-% bis 2,2 Gew.-% reicht; und/oder ein Massenprozent der zweiten Beschichtungsschichten in dem Positivmaterial von 0,5 Gew.-% bis 1,8 Gew.-% reicht.

8. Positivmaterial nach Anspruch 1, wobei
ein spezifischer Oberflächenbereich des Positivmaterials von 7 m²/g bis 15 m²/g reicht; und/oder Verdichtungsdichte des Positivmaterials von 2,3 g/cm³ bis 2,9 g/cm³ reicht; und/oder ein Medianpartikeldurchmesser des Positivmaterials von 0,3 µm bis 2,5 µm reicht; und/oder ein Massenprozent der Sekundärpartikel zu den ersten Primärpartikeln von 1:50 bis 20:1 reicht.

9. Positivmaterial nach Anspruch 8, wobei
ein spezifischer Oberflächenbereich des Positivmaterials von 8 m²/g bis 14 m²/g reicht; und/oder Verdichtungsdichte des Positivmaterials von 2,4 g/cm³ bis 2,8 g/cm³ reicht; und/oder ein Medianpartikeldurchmesser des Positivmaterials von 0,8 µm bis 2,2 µm reicht; und/oder ein Massenprozent der Sekundärpartikel zu den ersten Primärpartikeln von 5:40 bis 40:8 reicht.

10. Verfahren zum Herstellen eines Positivmaterials nach einem der Ansprüche 1-9, umfassend:
Mischen einer Eisenquelle und von Mikrogel, um einen ersten Vorläufer zu erhalten, wobei der erste Vorläufer das Mikrogel und die Eisenquelle umfasst, die innerhalb und außerhalb des Mikrogels verteilt ist, und das Mikrogel ein Kohlenstoffkettenpolymer umfasst; und
Mischen des ersten Vorläufers, einer Phosphorquelle, einer Lithiumquelle und einer Kohlenstoffquelle zur Wärmebehandlung, um das Positivmaterial zu erhalten, wobei während des Mischens des ersten Vorläufers, einer Phosphorquelle, einer Lithiumquelle und einer Kohlenstoffquelle zur Wärmebehandlung Teil der Phosphorquelle, der Lithiumquelle und der Kohlenstoffquelle in das Mikrogel des ersten Vorläufers adsorbiert werden und in situ mit der Eisenquelle innerhalb des Mikrogels reagieren, um die Sekundärpartikel zu erzeugen, gleichzeitig das Mikrogel und die Kohlenstoffquelle innerhalb des Mikrogels während der Wärmebehandlung carbonisiert werden, um erste Beschichtungsschichten mit netzartigen Strukturen auf Oberflächen zu bilden, um die Oberflächen der Sekundärpartikel zu bedecken, und
Teil der Phosphorquelle, der Lithiumquelle und der Kohlenstoffquelle in situ mit der Eisenquelle reagieren, die außerhalb des Mikrogels verteilt ist, um die ersten Primärpartikel zu erzeugen;
das Mikrogel zumindest eines von Polyacrylsäure-Mikrogel, Polystyrol-Mikrogel und Polyacrylamid-Mikrogel umfasst, ein Massenprozent der Eisenquelle zu dem Mikrogel von 100:0,01 bis 100:1,36 reicht und die Eisenquelle in einer Form einer Lösung ist und Lösungskonzentration der Eisenquelle größer als oder gleich 1 Mol/l ist;
wobei das Mischen des ersten Vorläufers, einer Phosphorquelle, einer Lithiumquelle und einer Kohlenstoffquelle zur Wärmebehandlung Folgendes umfasst:
Hinzufügen der Phosphorquelle zu dem ersten Vorläufer, Reagieren bei 60 °C bis 90 °C, um ein Präzipitat zu erhalten, und Fest-Flüssig-Trennen, Waschen und Trocknen des Präzipitats, um einen zweiten Vorläufer zu erhalten;
Hinzufügen der Lithiumquelle und der Kohlenstoffquelle zu dem zweiten Vorläufer, die bei 400 °C bis 700 °C 5 h bis 8 h erhitzt werden; und
ferner Hinzufügen eines Dispergierlösungsmittels während Hinzufügung der Phosphorquelle und der Kohlenstoffquelle zu dem zweiten Vorläufer, und wobei das Dispergierlösungsmittel zumindest eines von entionisiertem Wasser und einem Alkohollösungsmittel umfasst.

11. Verfahren nach Anspruch 10, wobei
ein Massenprozent eines vernetzenden Monomers in dem Mikrogel von 0,1 % bis 10 % reicht; und/oder
ein Partikeldurchmesser des Mikrogels von 300 nm bis 2500 nm reicht; und/oder
die Eisenquelle eine lösliche Eisenquelle umfasst und die lösliche Eisenquelle zumindest eines von Eisennitrat, Eisenchlorid, Eisensulfat und Eisenoxalat umfasst; und/oder
die Eisenquelle und das Mikrogel unter einer Rührbedingung gemischt werden.

12. Verfahren nach Anspruch 10, wobei
die Phosphorquelle zumindest eines von Phosphorsäure, Ammoniummonohydrogenphosphat, Ammoniumdihydrogenphosphat, Ammoniumphosphat und Natriumphosphat umfasst;
die Kohlenstoffquelle zumindest eines von Saccharose, Glucose und Polyethylenglycol umfasst;
die Lithiumquelle zumindest eines von Lithiumcarbonat, Lithiumphosphat, Lithiumhydroxid und Lithiumchlorid umfasst;
ein Massenprozent der Eisenquelle, der Phosphorquelle zu der Lithiumquelle 1: (1 bis 4): (1 bis 1,5) ist; und
ein Hinzufügungsverhältnis der Eisenquelle zu der Kohlenstoffquelle 1 mol: (10 bis 100) g ist.

13. Sekundärbatterie, umfassend das Positivmaterial nach einem der Ansprüche 1-9.

## Revendications

1. Matériau positif, comprenant un matériau actif de phosphate de fer lithié et une couche de revêtement, dans lequel
le matériau actif de phosphate de fer lithié comprend des particules secondaires, des premières particules primaires sont réparties entre au moins une partie des particules secondaires, et la couche de revêtement comprend des premières couches de revêtement recouvrant les surfaces des particules secondaires dans un état de revêtement de surface, et chacune des premières couches de revêtement a une structure réticulaire, les particules secondaires comprennent des secondes particules primaires ;
le diamètre de particule médian des premières particules primaires est compris entre 100 nm et 800 nm ; et/ou le diamètre de particule médian des secondes particules primaires est compris entre 50 nm et 700 nm ; et/ou le diamètre de particule médian des particules secondaires est compris entre 400 nm et 2000 nm ;
la couche de revêtement comprend en outre des secondes couches de revêtement au moins partiellement réparties sur les surfaces des premières particules primaires, une épaisseur moyenne des premières couches de revêtement est supérieure à une épaisseur moyenne des secondes couches de revêtement ; et
les premières couches de revêtement sont des couches de carbone, et les secondes couches de revêtement sont des couches de carbone.

2. Matériau positif selon la revendication 1, dans lequel
un diamètre de particule médian des secondes particules primaires est inférieur à un diamètre de particule médian des premières particules primaires.

3. Matériau positif selon la revendication 1 ou 2, dans lequel
le diamètre de particule médian des premières particules primaires est compris entre 200 nm et 600 nm ; et/ou le diamètre de particule médian des secondes particules primaires est compris entre 100 nm et 600 nm ; et/ou le diamètre de particule médian des particules secondaires est compris entre 600 nm et 1800 nm.

4. Matériau positif selon la revendication 3, dans lequel
l'épaisseur moyenne des premières couches de revêtement est comprise entre 1 nm et 15 nm ; et/ou l'épaisseur moyenne des secondes couches de revêtement est comprise entre 1 nm et 10 nm.

5. Matériau positif selon la revendication 4, dans lequel
l'épaisseur moyenne des premières couches de revêtement est comprise entre 3 nm et 12 nm ; et/ou l'épaisseur moyenne des secondes couches de revêtement est comprise entre 3 nm et 8 nm.

6. Matériau positif selon la revendication 3, dans lequel
un pourcentage en masse des premières couches de revêtement dans le matériau positif est compris entre 0,3 % en poids et 2,5 % en poids ; et/ou un pourcentage en masse des secondes couches de revêtement dans le matériau positif est compris entre 0,1 % en poids et 2,0 % en poids.

7. Matériau positif selon la revendication 6, dans lequel
un pourcentage en masse des premières couches de revêtement dans le matériau positif est compris entre 0,6 % en poids et 2,2 % en poids ; et/ou un pourcentage en masse des secondes couches de revêtement dans le matériau positif est compris entre 0,5 % en poids et 1,8 % en poids.

8. Matériau positif selon la revendication 1, dans lequel
une surface spécifique du matériau positif est comprise entre 7 m²/g et 15 m²/g ; et/ou une densité de compactage du matériau positif est comprise entre 2,3 g/cm³ et 2,9 g/cm³ ; et/ou un diamètre de particule médian du matériau positif est compris entre 0,3 µm et 2,5 µm ; et/ou un pourcentage en masse des particules secondaires par rapport aux premières particules primaires est compris entre 1:50 et 20:1.

9. Matériau positif selon la revendication 8, dans lequel
une surface spécifique du matériau positif est comprise entre 8 m²/g et 14 m²/g ; et/ou une densité de compactage du matériau positif est comprise entre 2,4 g/cm³ et 2,8 g/cm³ ; et/ou un diamètre de particule médian du matériau positif est compris entre 0,8 µm et 2,22 µm ; et/ou un pourcentage en masse des particules secondaires par rapport aux premières particules primaires est compris entre 5:40 et 40:8.

10. Procédé permettant la préparation d'un matériau positif selon l'une quelconque des revendications 1 à 9, comprenant :
le mélange d'une source de fer et d'un microgel pour obtenir un premier précurseur, dans lequel le premier précurseur comprend le microgel et la source de fer répartie à l'intérieur et à l'extérieur du microgel, et le microgel comprend un polymère à chaîne de carbone ; et
le mélange du premier précurseur, d'une source de phosphore, d'une source de lithium et d'une source de carbone pour traitement thermique afin d'obtenir le matériau positif, dans lequel pendant le mélange du premier précurseur, d'une source de phosphore, d'une source de lithium et d'une source de carbone pour traitement thermique, une partie de la source de phosphore, de la source de lithium et de la source de carbone sont adsorbées dans le microgel du premier précurseur et réagissent in situ avec la source de fer à l'intérieur du microgel pour générer les particules secondaires, en même temps, le microgel et la source de carbone à l'intérieur du microgel sont carbonisés pendant le traitement thermique pour former des premières couches de revêtement ayant des structures réticulaires en surfaces pour couvrir les surfaces des particules secondaires, et
une partie de la source de phosphore, de la source de lithium et de la source de carbone réagissent in situ avec la source de fer répartie à l'extérieur du microgel pour générer les premières particules primaires ;
le microgel comprend au moins l'un d'un microgel d'acide polyacrylique, d'un microgel de polystyrène et d'un microgel de polyacrylamide, un pourcentage en masse de la source de fer par rapport au microgel est compris entre 100:0,01 et 100:1,36, et la source de fer est sous forme de solution, et la concentration en solution de la source de fer est supérieure ou égale à 1 mol/L ;
dans lequel le mélange du premier précurseur, d'une source de phosphore, d'une source de lithium et d'une source de carbone pour traitement thermique comprend :
l'ajout de la source de phosphore au premier précurseur, la réaction à une température de 60° C à 90° C pour obtenir un précipité, et la séparation solide-liquide, le lavage et le séchage du précipité pour obtenir un second précurseur ;
l'ajout de la source de lithium et de la source de carbone au second précurseur, qui sont chauffés à une température de 400° C à 700° C pendant 5 h à 8 h ; et
en outre, l'ajout d'un solvant de dispersion pendant l'addition de la source de phosphore et de la source de carbone au second précurseur, et le solvant de dispersion comprend au moins l'un de l'eau déionisée et d'un solvant alcoolique.

11. Procédé selon la revendication 10, dans lequel
un pourcentage en masse d'un monomère de réticulation dans le microgel est compris entre 0,1 % et 10 % ; et/ou
un diamètre de particule du microgel est compris entre 300 nm et 2500 nm ; et/ou
la source de fer comprend une source de fer soluble, et la source de fer soluble comprend au moins l'un du nitrate ferrique, du chlorure ferrique, du sulfate ferrique et de l'oxalate ferrique ; et/ou
la source de fer et le microgel sont mélangés dans des conditions d'agitation.

12. Procédé selon la revendication 10, dans lequel
la source de phosphore comprend au moins l'un de l'acide phosphorique, du monohydrogénophosphate d'ammonium, du dihydrogénophosphate d'ammonium, du phosphate d'ammonium et du phosphate de sodium ;
la source de carbone comprend au moins un élément parmi le saccharose, le glucose et le polyéthylène glycol ;
la source de lithium comprend au moins l'un du carbonate de lithium, du phosphate de lithium, de l'hydroxyde de lithium et du chlorure de lithium ;
un pourcentage en masse de la source de fer, la source de phosphore, par rapport à la source de lithium est de 1:(1 à 4):(1 à 1,5 ) ; et
un rapport d'addition de la source de fer à la source de carbone est de 1 mol : (10 à 100) g.

13. Batterie secondaire, comprenant le matériau positif selon l'une quelconque des revendications 1 à 9.
